# EUROPEAN PATENT APPLICATION

(11) **EP 2 374 715 A2**
(43) Date of publication of application: **12.10.2011**
(21) Application number: 11250220.8
(22) Date of filing: 25.02.2011
(51) Int. Cl.: B64D 15/14

(54) **Aircraft ice protection system**

(30) Priority: 29.03.2010 US 318786 P
(71) Applicant: Goodrich Corporation, Charlotte, NC 28217 (US)
(72) Inventor: Botura, Galdemir C., San Diego, CA 92154 (US); Christy, Daniel P., Akron, Ohio 44314 (US)
(74) Representative: Hargreaves, Timothy Edward

(57) **Abstract**

An ice protection system (30) wherein a heater array (50) comprises a series of consecutive electrothermal heaters (51) which proceed one after another in a substantially aft-fore-aft path. A power source (60) supplies the heater array (50) with electrical energy and a heater interface (80) switches each heater (51) into either an ON condition or an OFF condition. The heater array (50) can be architected to effectively and efficiently protect an ice-susceptible aircraft surface (40) by strategic heater shaping, concentrated power-density allocation, and/or tactical heating-episode execution.

## Description

An ice protection system can comprise an array of electrothermal heaters arranged to protect an ice-susceptible surface of an aircraft. In such a system, electrical energy is supplied (*e.g*., from an onboard generator) to a heater and the energized heater converts it into thermal energy (*i.e*., heat). This thermal energy heats the relevant aircraft surface to a temperature above freezing to prevent and/or shed icing thereon.

### SUMMARY

An ice protection system is provided that can optimize deicing times for an Ice-susceptible surface of an aircraft. With this system, the relevant surface Is covered by a heater array comprising a series of consecutive heaters arranged in an aft-fore-aft path. The heaters are purposely sized to have relatively small surface areas to thereby increase power density with a given electrical energy supply. This increase in power density translates into an exponential reduction in deicing time. With this ice protection system, an efficient and effective heater array can be architected regardless of surface shape and/or electrical energy budget.

### DRAWINGS

Figure 1 shows an aircraft having several surfaces protectable by the ice protection system.
Figure 2 shows the ice protection system.
Figures 3-13 show some possible ice protection schemes.

### DESCRIPTION

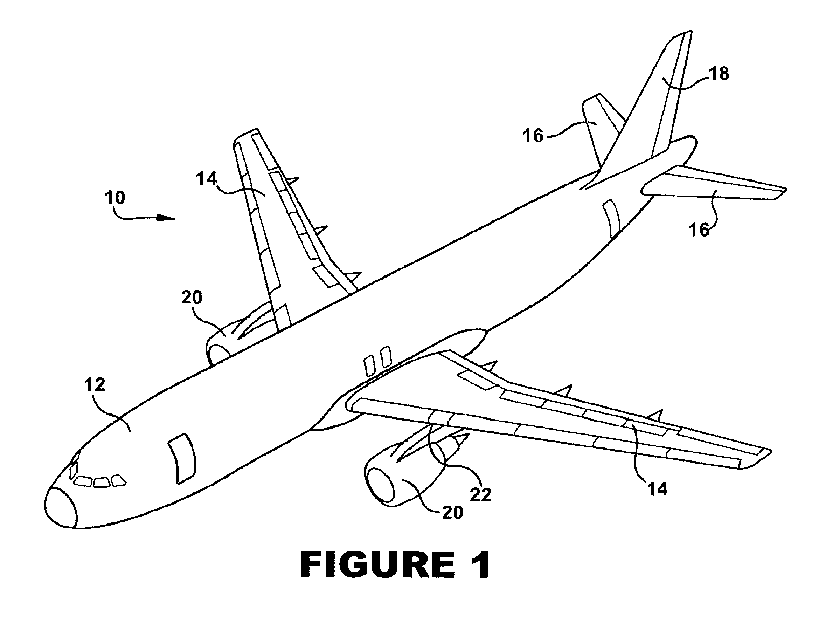

An aircraft 10, such as that shown in Figure 1, can comprise fuselage 12, wings 14, horizontal stabilizers 16, a vertical stabilizer 18, engines 20, and pylons 22. The wings 14 are the aircraft's primary lift providers. The horizontal stabilizers 16 prevent up-down motion of the aircraft nose, and the vertical stabilizer 18 discourages side to side swinging. The engines 20 are the aircraft's thrust-providing means and the pylons 22 serve as underling mounting means for the engines.

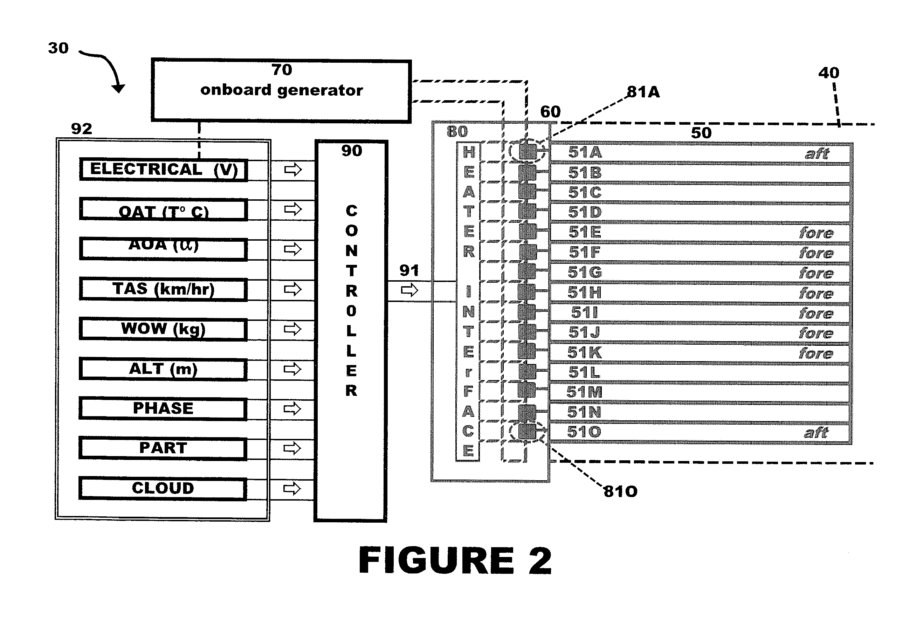

Referring now to Figure 2, an Ice protection system 30 is shown in conjunction with an ice-susceptible aircraft surface 40. The heater array 50 comprises a series of consecutive heaters 51A - 51O adapted to overlay the surface 40. The surface 40 can be part of a wing, a stabilizer 16/18, an engine 20, a pylon 22 or any other ice-susceptible part of the aircraft 10.

The ice protection system 30 further includes a power source 60 which supplies the heater array 50 with a dedicated supply of electrical energy from an onboard generator 70. A heater interface 80 includes an electrical switch 81 for each heater 51, and these switches 81 switch their respective heaters 51 between an ON condition and OFF condition. When in the ON condition, the energized heater 51 receives substantially all of the electrical energy supplied to the heater array 50. When in the OFF condition, the heater 51 receives substantially none of the power supplied to the heater array 50.

A controller 90 can convey instructions to the heater interface 80 (via line 91) or otherwise control the switching on and off of the heaters 51. The controller 90 can base its instructions on derived directives, stored strategies, and/or information provided through an input panel 92 (*e.g*., electrical energy (VOLTS), outside air temperature (OAT), angle of attack (AOA), true air speed (TAS), weight on wheels (WOW), altitude (ALT), flight phase (PHASE), part position (PART), and/or cloud characteristics (CLOUD), etc.).

In the illustrated system 30, the heater interface 80 is shown positioned adjacent to the heater array 50 and physically connected thereto. With such a layout, electrical energy can be provided through one supply cable routed between the heater array 50 and the generator 70. But a heater interface 80 that is remote from the heater array is possible and contemplated and, in fact, may be preferred to facilitate servicing.

As was indicated above, the heater array 50 comprises a series of consecutive heaters 51A - 51O adapted to overlay the surface 40. "Consecutive" In this context refers to the heaters 51A - 51O being arranged one after another in an aft-fore-aft path. Although the surface 40, the array 50, and the heaters 51 are drawn flat in the figures, this is simply for ease in illustration and explanation. The surface 40 will probably follow a non-linear roughly parabolic route (whereby the heater array 50 will adopt a similar course).

If the surface area 40 is on one of the wings 14, for example, the heaters 50A - 50D could be situated on the wing's upper regions, the heaters 50E - 50K could wrap around fore regions, and the heaters 50L - 50O could be situated on the lower regions. An analogous heater arrangement could be used if the surface area 40 is on one of the horizontal stabilizers 16.

If the surface area 40 is on the vertical stabilizer 18, the heaters 50A - 50D could be on rightside regions, the heaters 50E-50K could curve around fore regions, and the heaters 50L-50O could be leftside regions. The heaters 51 could be likewise located if the surface area 40 is on one of the pylons 22. And if the surface area 40 is on one of the engines 20, the heaters 50A - 50D could be situated on outer regions, the heaters 50E - 50K could bend around the engine's lip, and the heaters 50L-50O could be situated on inner regions.

The heaters 51 are purposely sized to cover relatively small surface areas (*e.g*., less than 500 cm², less than 400 cm², less than 300 cm⁷, less than 200 cm², less than 100 cm², etc.). If the surface 40 has typical area dimensions (*e.g*., at least 0.10 m², at least 0,20 m², at least 0.30 m², at least 0.40 m², at least 0.5 m², at least 1 m², etc.), this will result in the heater array 50 having a generous number of heaters 51 (*e.g*. at least four, at least six, at least eight, at least ten, at least twelve, at least fourteen, at least sixteen, etc.).

The relatively small size of the heaters 51 amplifies their power density for a given amount of electrical energy input. And because deicing time is indirectly proportional to the square of power density (*i.e*., deicing time = k/P² where k is a constant), this exponentially reduces deicing time to a significantly shorter interval. Thus, with the system 30, ice protection steps can be completed in a shorter time frame without the dedication of additional electrical energy.

While the deicing-time equation theoretically implies that the archetype array would assimilate an enormous number of tiny heaters, other limiting factors are introduced into the equation. For example, to take optimum advantage of high power density, independent control of each of the heaters 51 may be necessary. Thus, the weight, cost, and inconvenience of the corresponding control circuitry must be taken into consideration. Additionally or alternatively, minute heater sizes and/or multitude-heater arrays can introduce manufacturing obstacles, assembly complications, and/or installation impediments. These and other difficulties factor into the calculus of choosing appropriate heater sizes and/or array logistics.

Moreover, the stagnation region of the aircraft surface 40, and the heater(s) 51 associated with this region may play prominently into the array architecture. The significance of the stagnation region Is that it is customarily considered to require unremitting anti-icing (*i*.*e.*, the constant and continuous prevention of ice formation). The non-stagnation regions on the other hand, have conventionally been provided with intermittent deicing (*i.e*, the periodic removal of ice formation).

The heater(s) 51 associated with the stagnation region can be called the stagnation heater 51_{STAG}. The remaining heaters 51 In the heater array 50 (which are not associated with the stagnation region) can be called the non-stagnation heaters 51_{nonSTAG}. This shorthand refers to current flight circumstances, as the location of the stagnation region (and thus the stagnation heater 51_{STAG}) can change during the course of a flight.

An optimum array design may require the stagnation heater 51_{STAG} to have an aft-fore-aft dimension large enough to sufficiently cover the stagnation region of the surface 40 (*e.g*., at least 1 cm, at least 1.5 cm, at least 2 cm, etc.). At the same time, the most advantageous array may require avoiding making this dimension too large (*e.g.*, less than 5 cm, less than 4.5 cm, less than 4 cm, less 3 cm, etc.). And, as this stagnation region will shift according to the aircraft's angle of attack, a range of fore heaters 51 (*e.g*., at least three fore heaters, at least five fore heaters, at least seven fore heaters, etc.) may need to share this significant aft-fore-aft dimension.

The illustrated congregation of rectangular heaters 51 in a regular row is certainly not required. That being said, a thin rectangular geometry may often be the most convenient shape for the heaters 51. The aft-fore-aft dimension of the rectangle can be sized to accommodate the stagnation district and the transverse dimension can be made substantially greater (*e.g*., five times as great, ten times as great, fifteen times as great, etc.) to achieve the desired surface area. And although the heaters 51 all need not be the same size/shape, this may indeed be the most opportune array arrangement.

Depending upon the aircraft 10 and the particular aircraft component, and/or expected flying conditions, more than one row of heater arrays 50 may be necessary. With the wings 14, for example, two or three heater arrays 50 can be arranged in the spanwise rows. With the horizontal stabilizers 16, the vertical stabilizer 18 and/or the pylons 22, a single heater array 50 may be sufficient. With the engine 20, five or more heater arrays 50 can be arranged in radial rows circling the inlet lip.

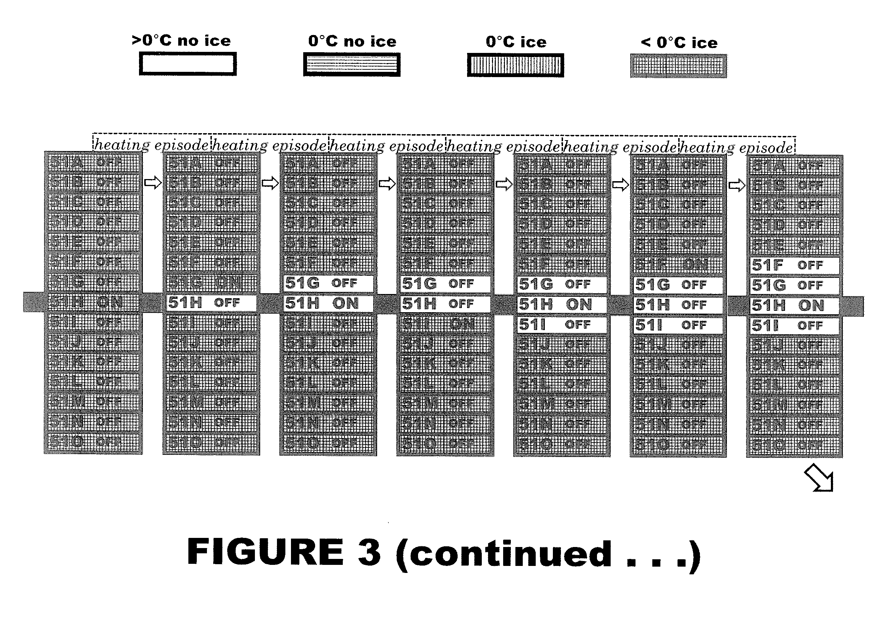

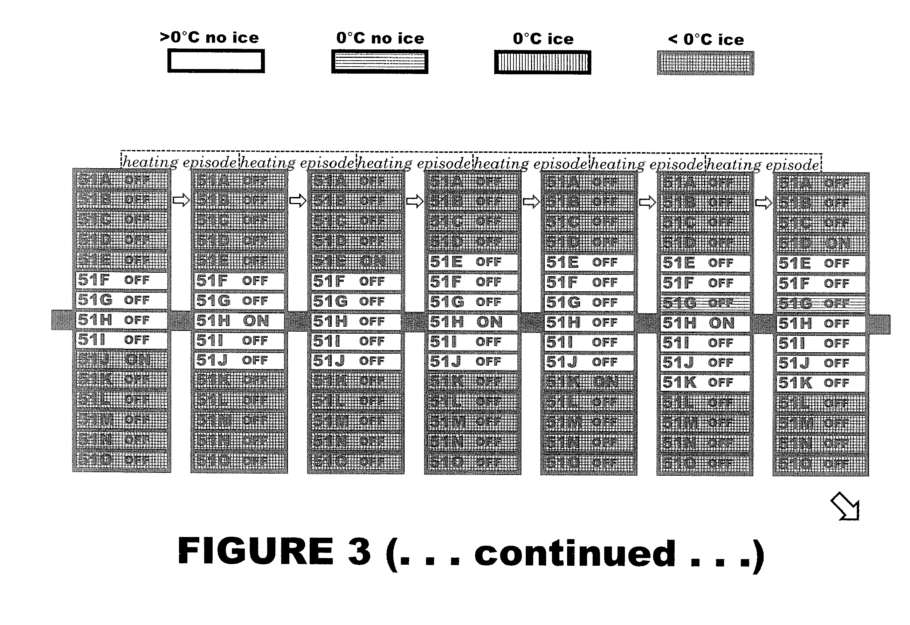

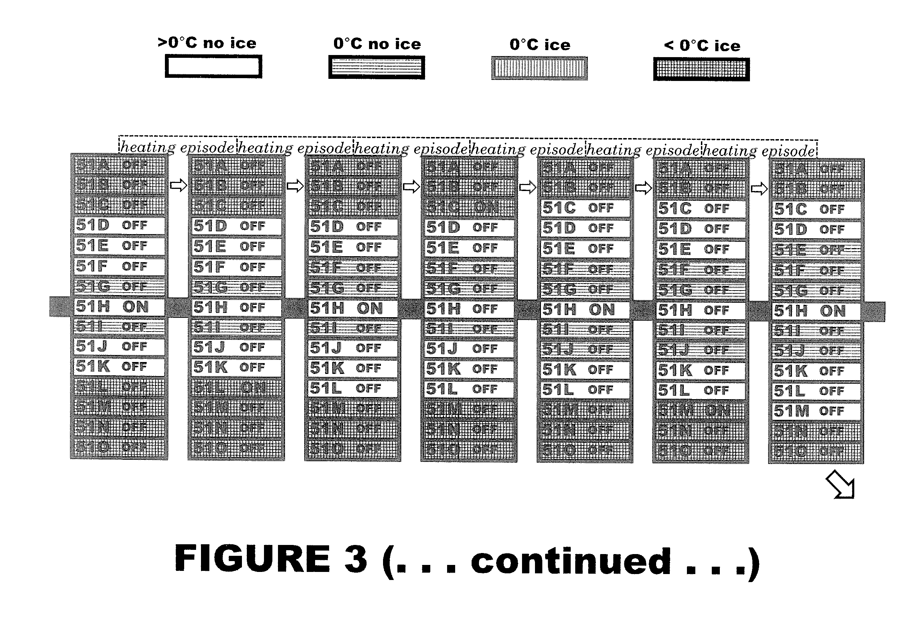

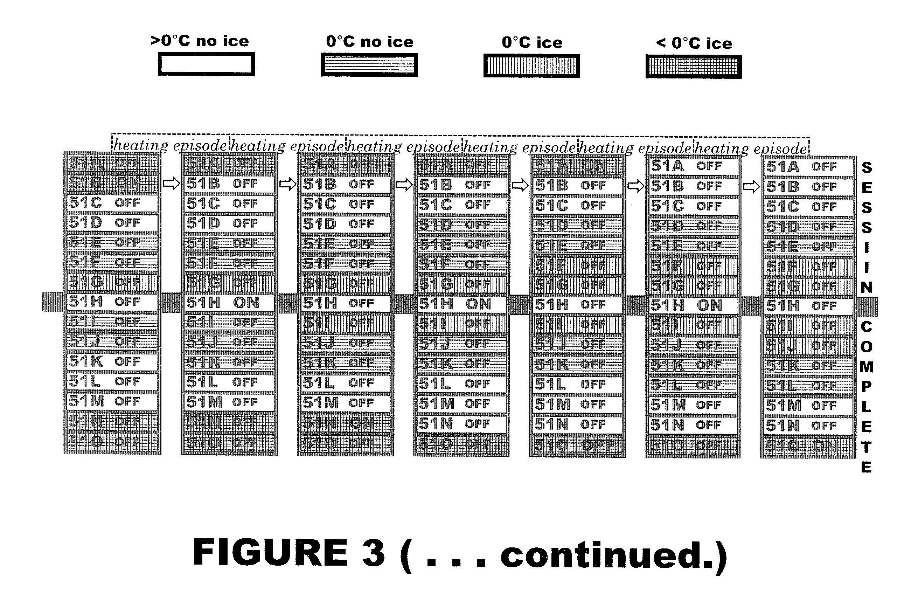

Turning now to Figures 3-7, some ice protection schemes are schematically diagrammed. In these schemes, ice-protection steps are conceptually divided into heating episodes. Each heating episode involves the stagnation heater 51_{STAG} (*i.e*., heater 51H in the Figures 3 - 7) and at least one other non-stagnation heater 51 (*i.e.*, one of heaters 51A - 51G or 51I - 51O in Figures 3 - 7). The heating episode is then reiterated until each non-stagnation heater 51 has been involved to complete a session. Sessions can be repeated for as long as ice protection is required.

In the ice-protection schemes shown in Figures 3 - 7, only one heater 51 is an ON condition at a time, whereby it receives substantially all of the electrical energy supplied to the heater array 50. This heater 51 is switched to an OFF condition (whereat receives substantially none of the power supplied to the heater array 50) before another heater 51 is switched ON. This ON-OFF switching can occur almost instantaneously and, in the drawings, appears to happen at the same time.

The system 30 allows ice-protection schemes wherein the stagnation heater 51_{STAG} (again, heater 51H in Figures 3 - 7) can accomplish anti-icing without remaining continuously in the ON condition. In the illustrated schemes, the stagnation heater 51_{STAG} is involved in every episode. More specifically, during each episode, the stagnation heater 51_{STAG} Is switched ON for an interval and it is switched OFF for an interlude (so that a non-stagnation heater 51 can be switched ON).

The interval period Is purposely long enough to allow the stagnation region to overheat to a temperature greater than 0° C. And the interlude period is strategically brief enough so that stagnation region will not have the chance to cool down to freezing temperatures. The interval period and the interlude period can be the same or different, depending upon what is necessary to accomplish these temperature tactics. And either or both of these time periods can be a predetermined value based on worst-case flight conditions or they can be calculated based on current flight circumstances. In many instances, the interval period and/or the interlude period will be less than 1 second (and/or less than 0.75 second, etc.) but greater than 0.10 second (and/or greater than 0.20 second, greater than 0.30 second, greater than 0.40 second, greater than 0.50 second, etc.).

In Figure 3, the first heating episode comprises switching ON the stagnation heater 51H for the appropriate time Interval, switching OFF the stagnation heater 51, switching ON the heater 51G for the time interlude, and then switching OFF the heater 51G. The second heating episode comprises switching ON the stagnation heater 51H for the time interval, switching OFF the stagnation heater 51, switching ON the heater 51I for the time interlude, and then switching OFF the heater 51I. The third heating episode comprises switching ON the stagnation heater 51H for the time interval, switching OFF the stagnation heater 51, switching ON the heater 51F for the time interlude, and then switching OFF the heater 51F. These heating episodes continue in this alternate-side fore-to-aft pattern until all of the non-stagnation heaters 51 have been involved in heating episode.

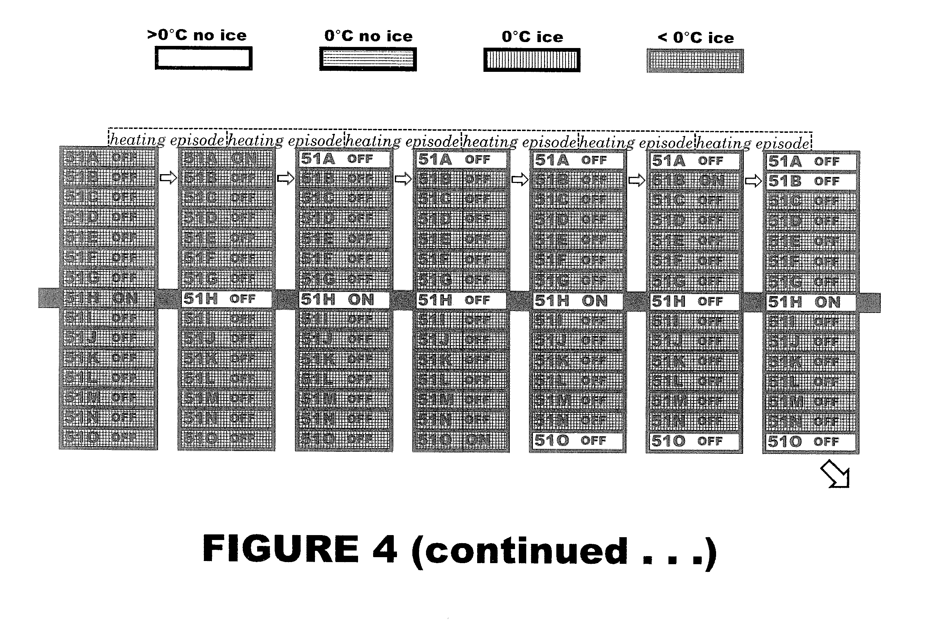

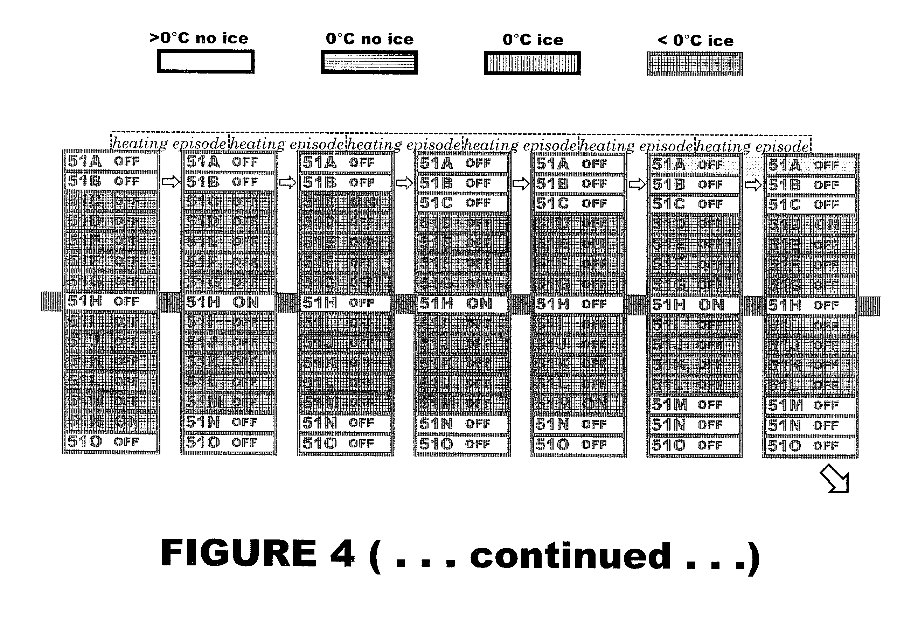

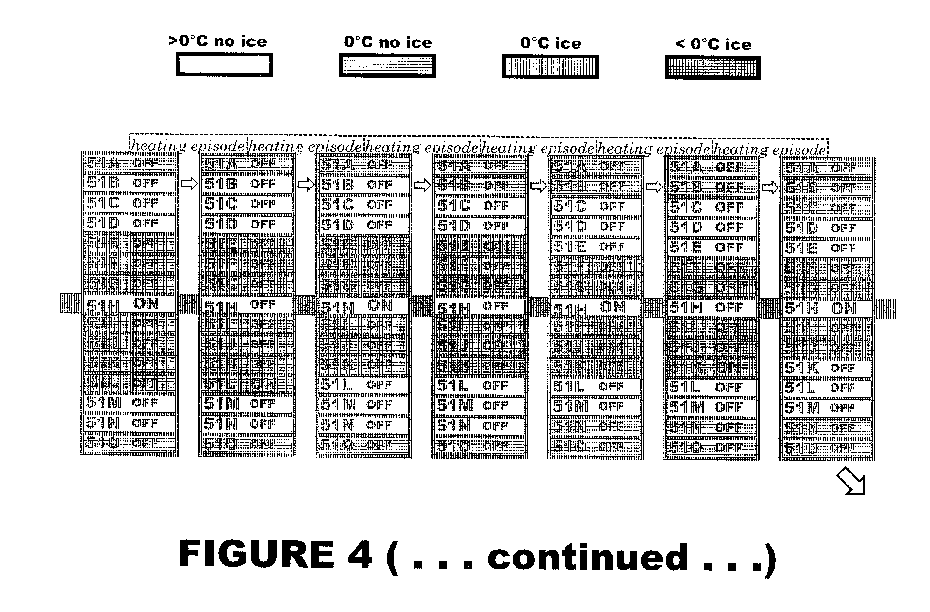

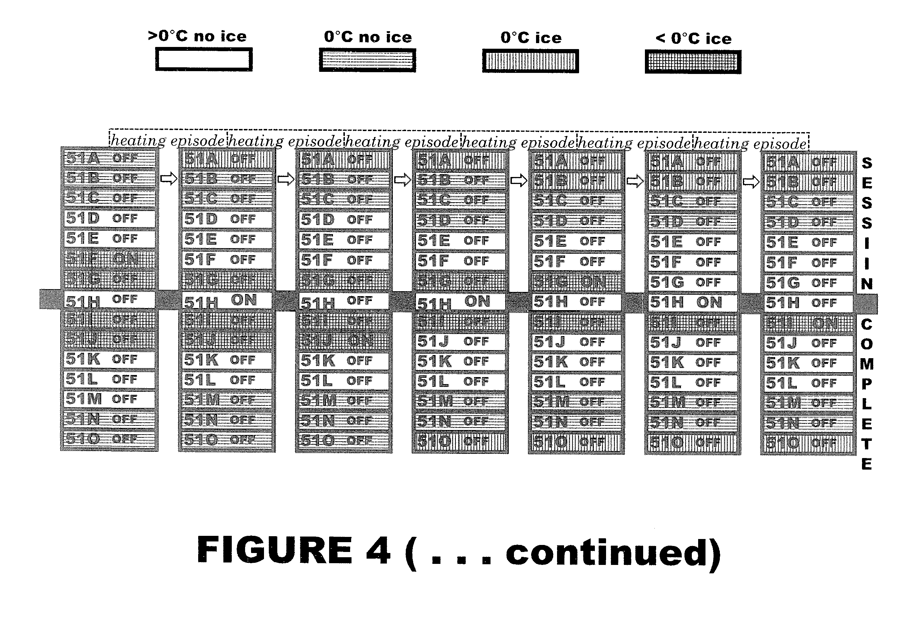

In Figure 4, the first heating episode comprises switching ON the stagnation heater 51H for the appropriate time interval, switching OFF the stagnation heater 51, switching ON the heater 51A for the time interlude, and then switching OFF the heater 51A. The second heating episode comprises switching ON the stagnation heater 51H for the time interval, switching OFF the stagnation heater 51, switching ON the heater 51O for the time interlude, and then switching OFF the heater 51O. The third heating episode composes switching ON the stagnation heater 51H for the time interval, switching OFF the stagnation heater 51, switching ON the heater 51B for the time interlude, and then switching OFF the heater 51B, These heating episodes continue in this alternate-side aft-to-fore pattern until all of the non-stagnation heaters 51 have been involved in heating episode.

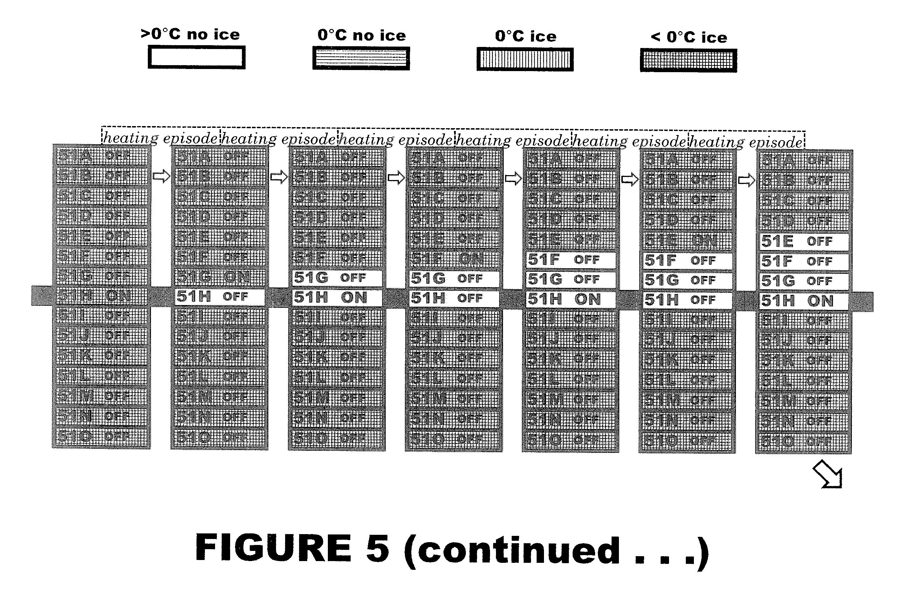

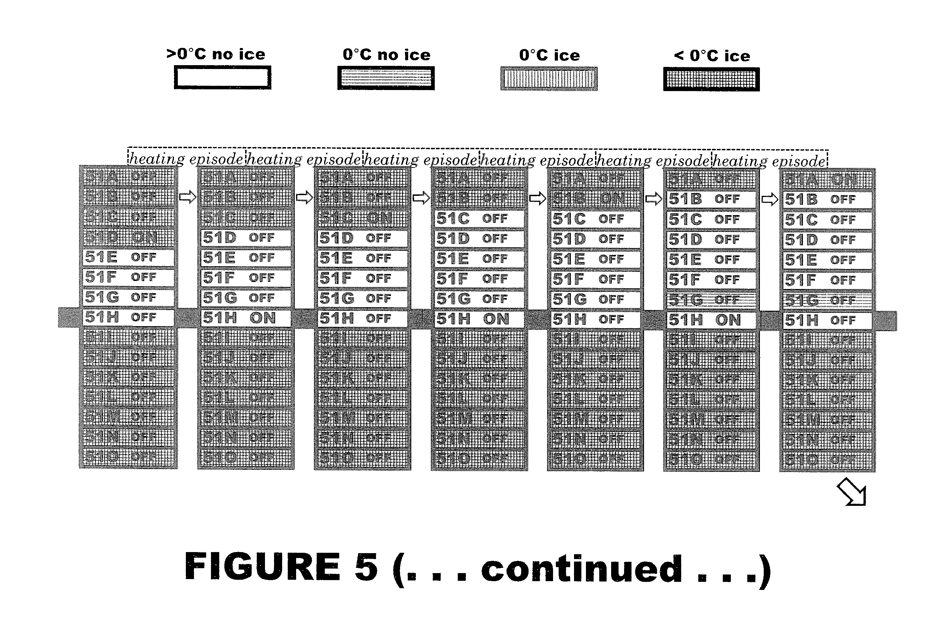

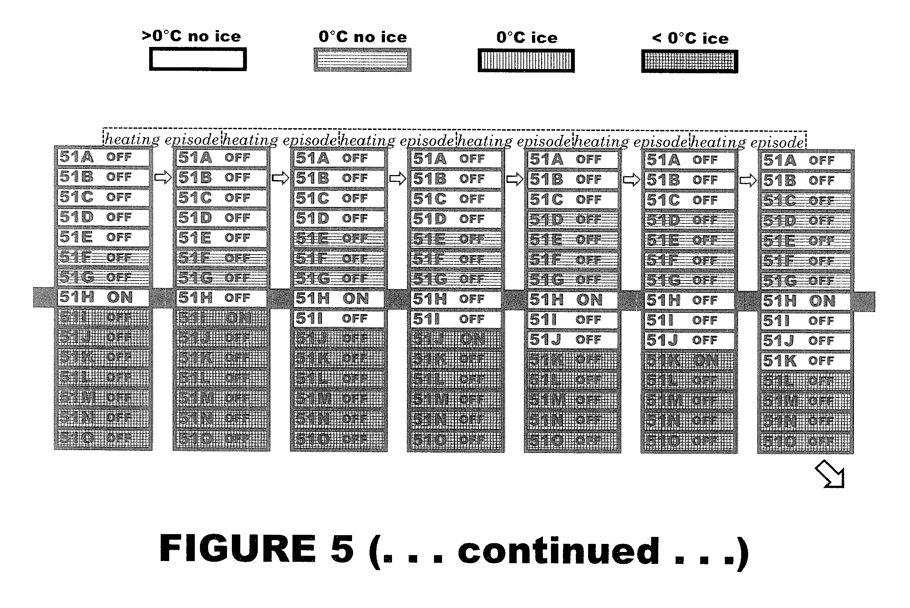

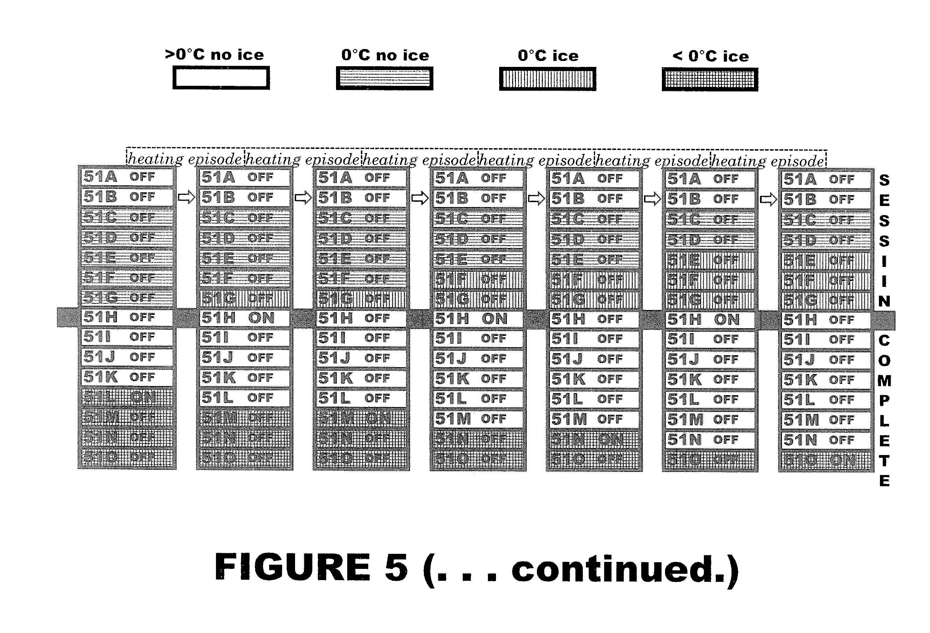

In Figure 5, the first heating episode comprises switching ON the stagnation heater 51H for the appropriate time interval, switching OFF the stagnation heater 51, switching ON the heater 51G for the time interlude, and then switching OFF the heater 51G. The second heating episode comprises switching ON the stagnation heater 51H for the time interval, switching OFF the stagnation heater 51, switching ON the heater 51F for the time interlude, and then switching OFF the heater 51F. The third heating episode comprises switching ON the stagnation heater 51H for the time interval, switching OFF the stagnation heater 51H, switching ON the heater 51E for the time interlude, and then switching OFF the heater 51E. These heating episodes continue in the fore-aft direction on this one side of the stagnation heater 51H until the aftmost heater 51A is involved in a heating episode. The next episode then involves heater 51I on the other side of the stagnation heater 51H and this same-side fore-aft pattern continues until all of the non-stagnation heaters 51 have been involved in heating episode.

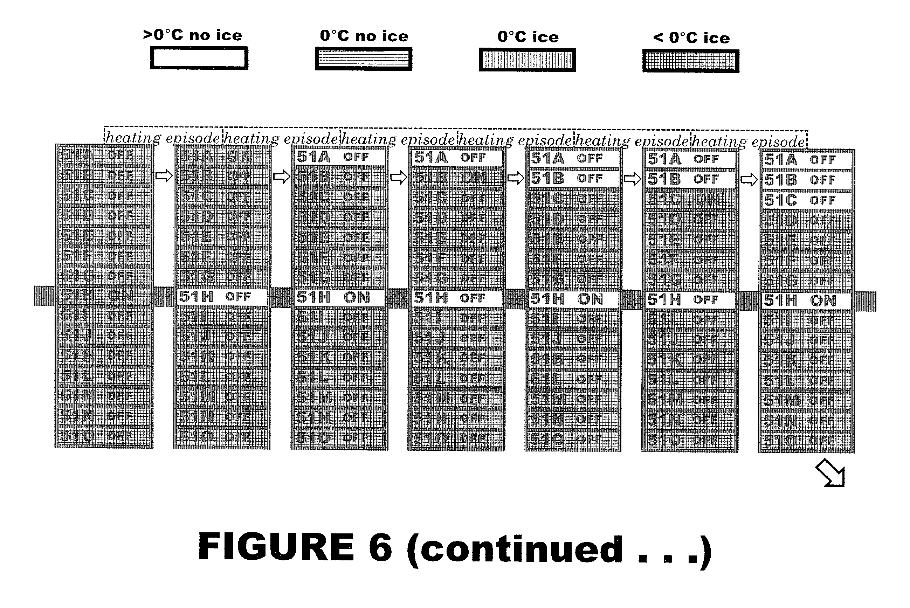

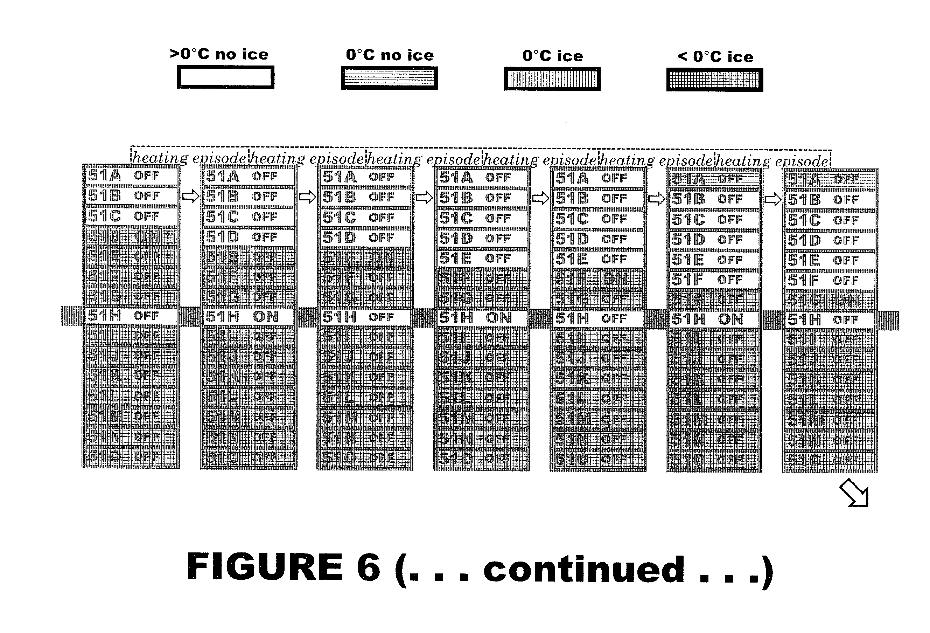

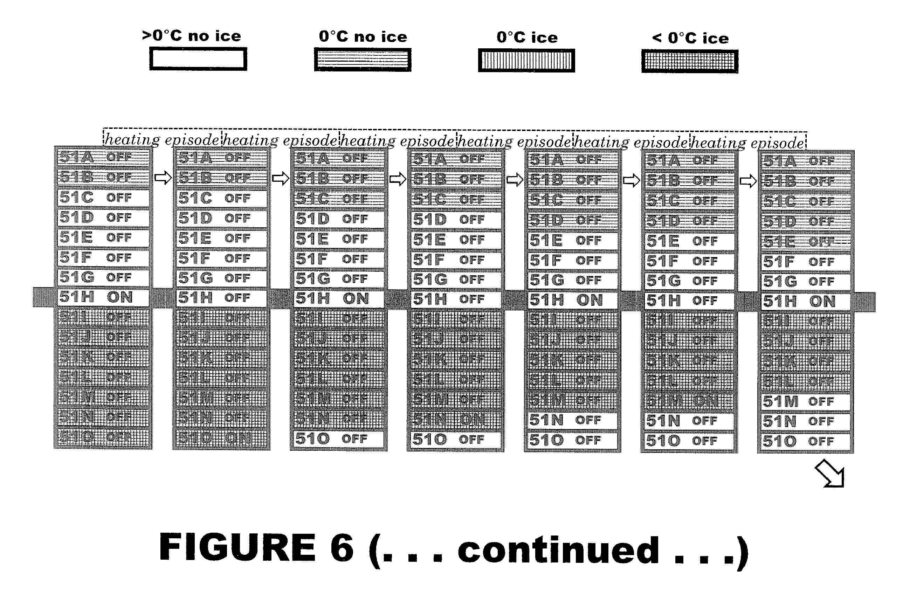

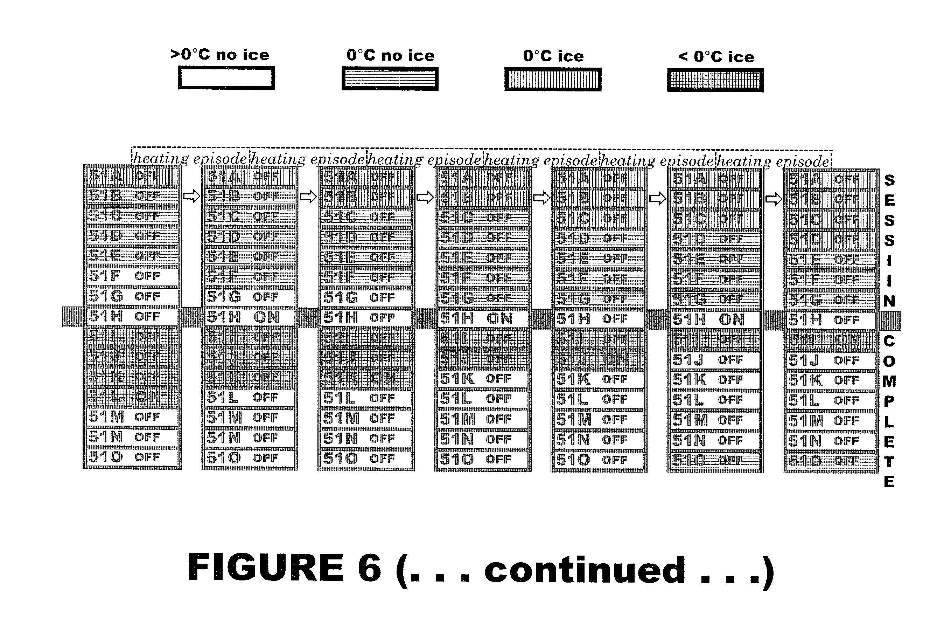

In Figure 6, a same-side pattern similar to that of Figure 5 is followed by the heating episodes, except in the aft-fore direction. The first heating episode comprises switching ON the stagnation heater 51H for the appropriate time interval, switching OFF the stagnation heater 51, switching ON the heater 51A for the time Interlude, and then switching OFF the heater 51A. The second heating episode comprises switching ON the stagnation heater 51H for the time interval, switching OFF the stagnation heater 51, switching ON the heater 51O for the time interlude, and then switching OFF the heater 51O. The third heating episode comprises switching ON the stagnation heater 51H for the time interval, switching OFF the stagnation heater 51H, switching ON the heater 51B for the time interlude, and then switching OFF the heater 51B. This same-side aft-fore pattern continues until all of the non-stagnation heaters 51 have been involved in heating episode.

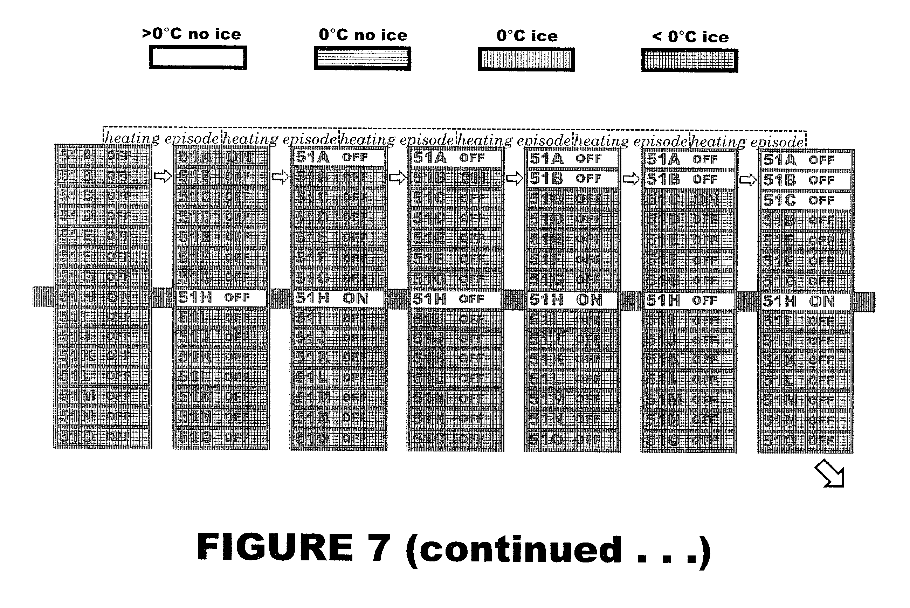

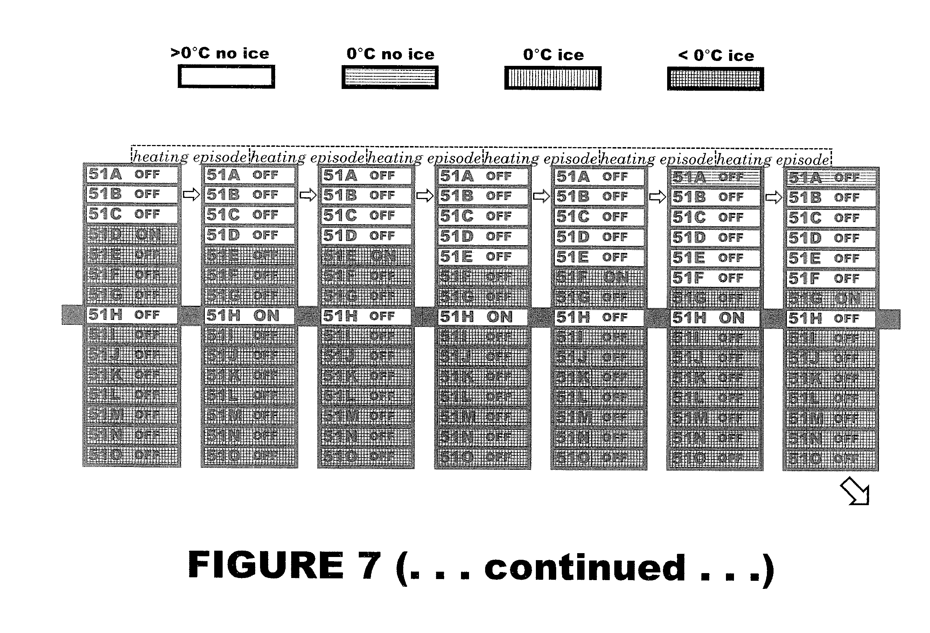

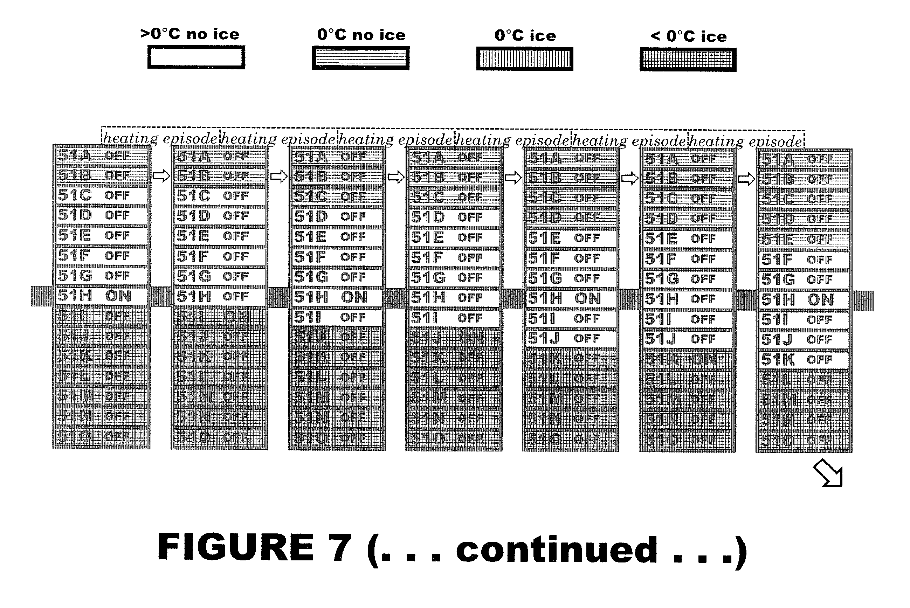

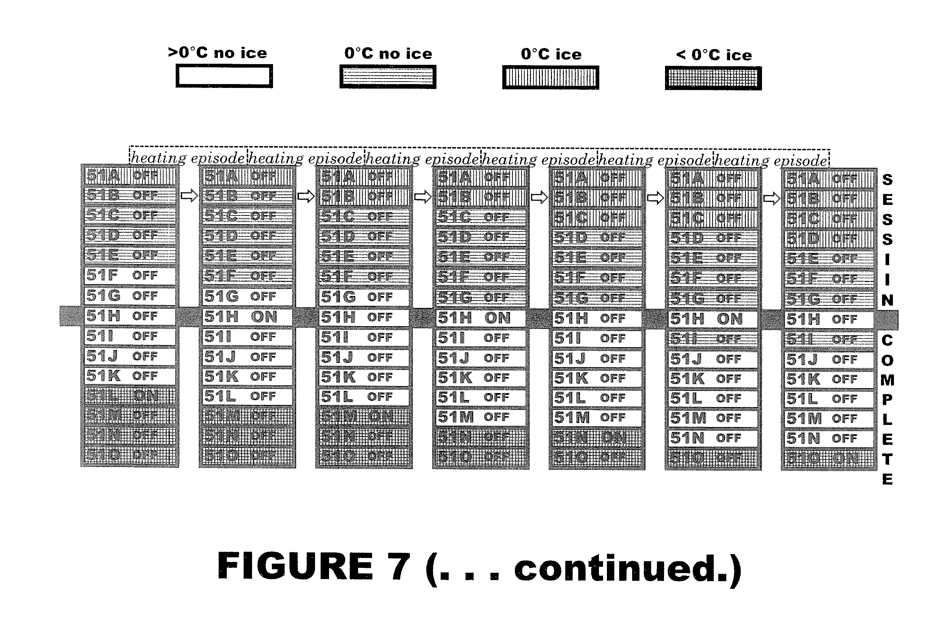

In Figure 7, the first heating episode comprises switching ON the stagnation heater 51H for the appropriate time interval, switching OFF the stagnation heater 51H, switching ON the heater 51A for the time interlude, and then switching OFF the heater 51A. The second heating episode comprises switching ON the stagnation heater 51H for the time interval, switching OFF the stagnation heater 51H, switching ON the heater 51B for the time interlude, and then switching OFF the heater 51B. The third heating episode comprises switching ON the stagnation heater 51H for the time interval, switching OFF the stagnation heater 51H, switching ON the heater 51C for the time interlude, and then switching OFF the heater 51C. This is continued until heater 51G is involved in a heating episode and then next episode involves heater 51I. This aft-fore-aft pattern continues until heater 510 is involved in a heating episode.

In sessions shown in Figures 3 - 7, the first heating episode is in the upper (in the illustrated orientation) side of the stagnation heater 51H. This could be reversed and the relevant patterns practiced by starting on the opposite side of the stagnation heater 51H. After a first session is completed the inter-side sequence may be somewhat moot, but in some instances, order may be pertinent for the first session. For example, with the sudden onset of icing, it may be best to promptly deice the inner surface of an engine 20, while its outer surface can tolerate a deicing delay without consequences.

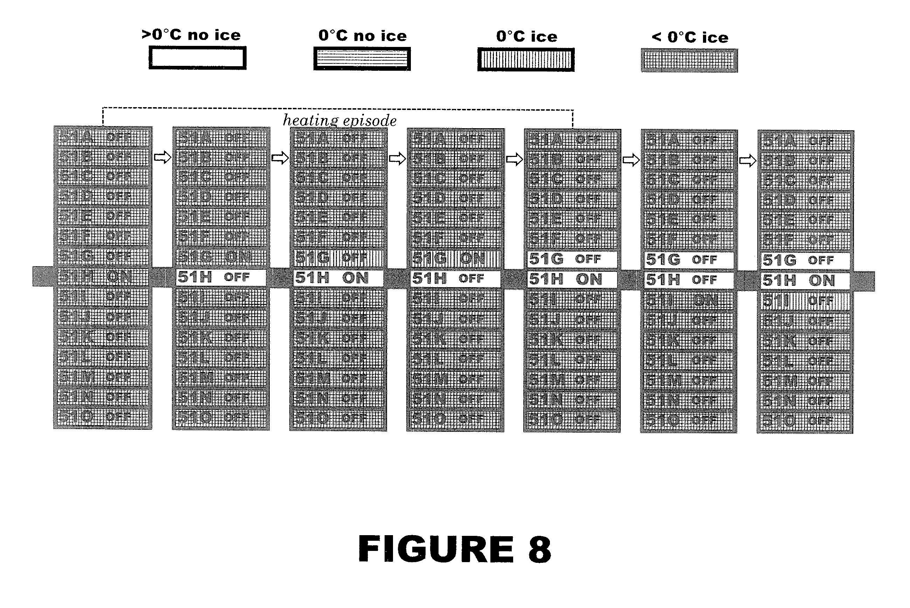

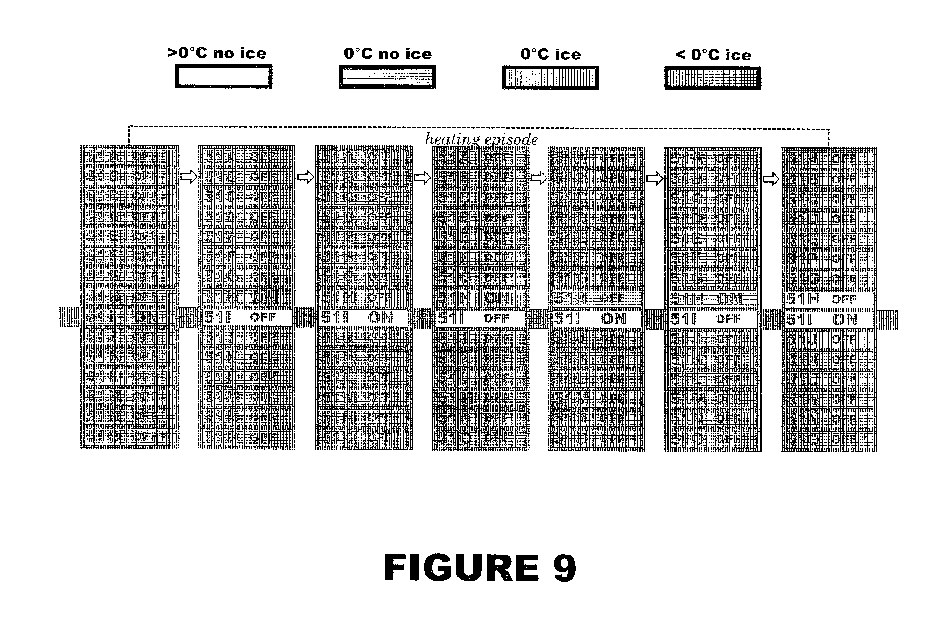

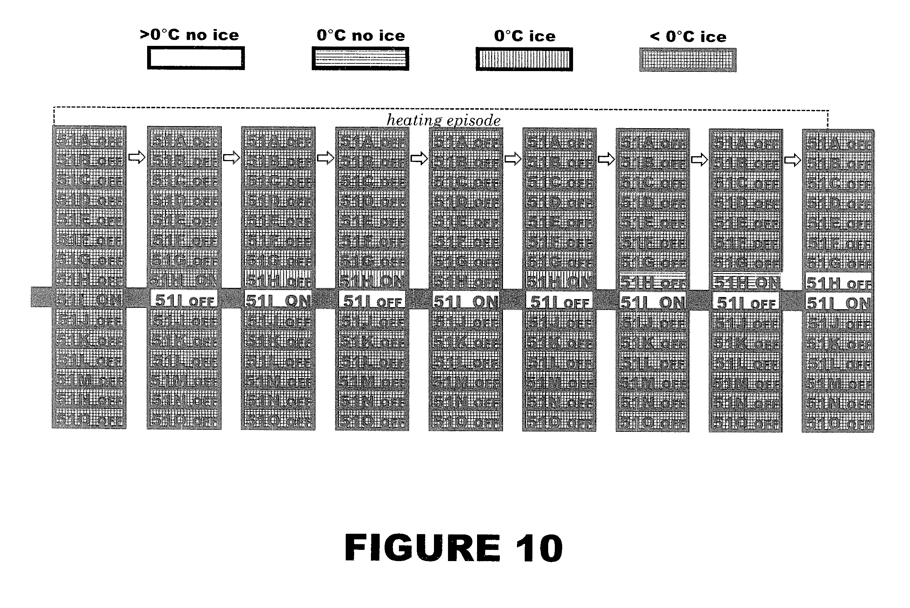

In sessions shown in Figures 3 - 7, the non-stagnation heaters 51_{nonSTAG} are on for one interlude during each heating episode. In colder circumstances, this could be insufficient to heat the corresponding region of the aircraft surface 40 to an above-freezing temperature. If so, each heating episodes can be expanded to include plural interludes wherein the same non-stagnation heater 51_{nonSTAG} is energized. For example, each heating episode can be extended to include two interludes (Figure 8), three interludes (Figure 9), four interludes (Figure 10), or more interludes if necessary or beneficial.

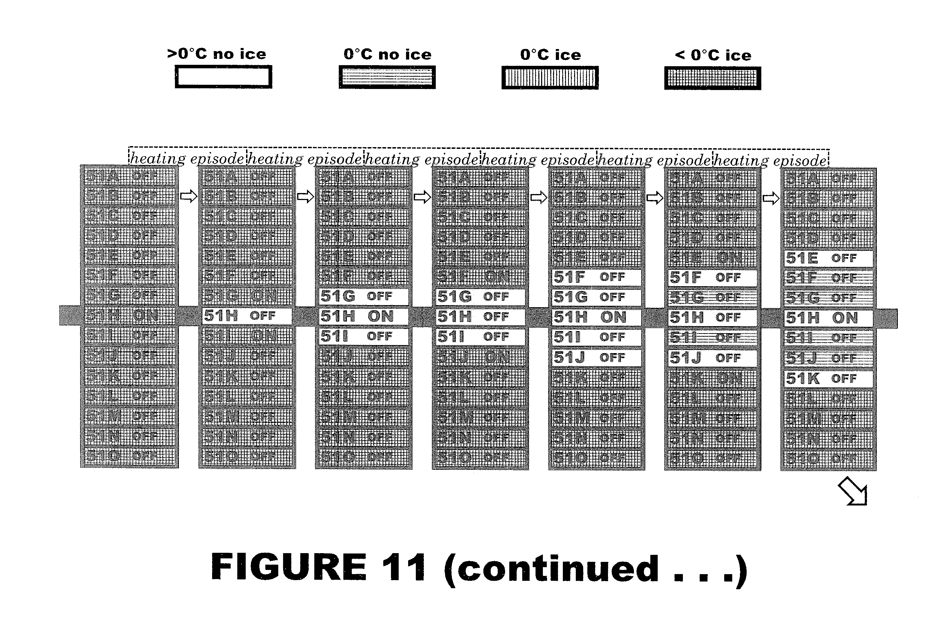

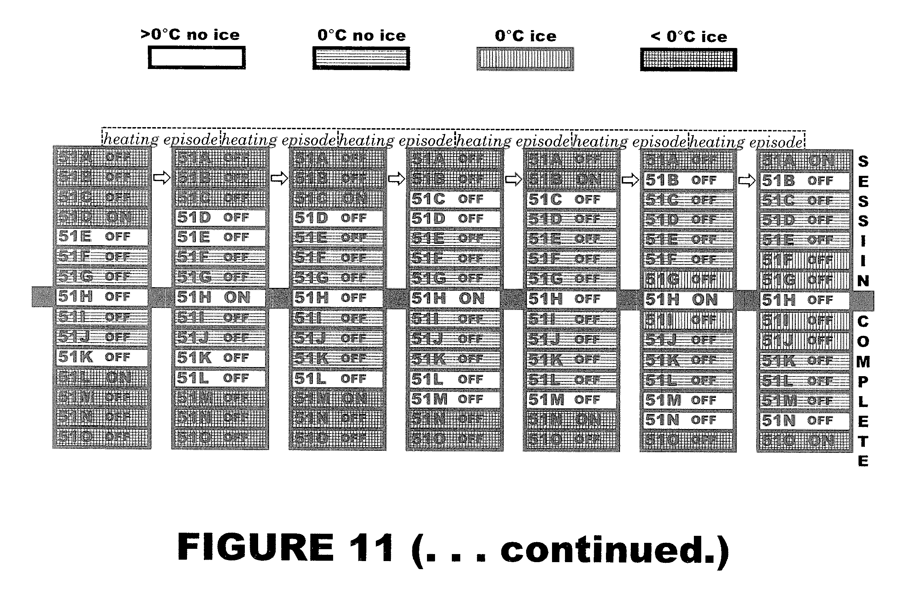

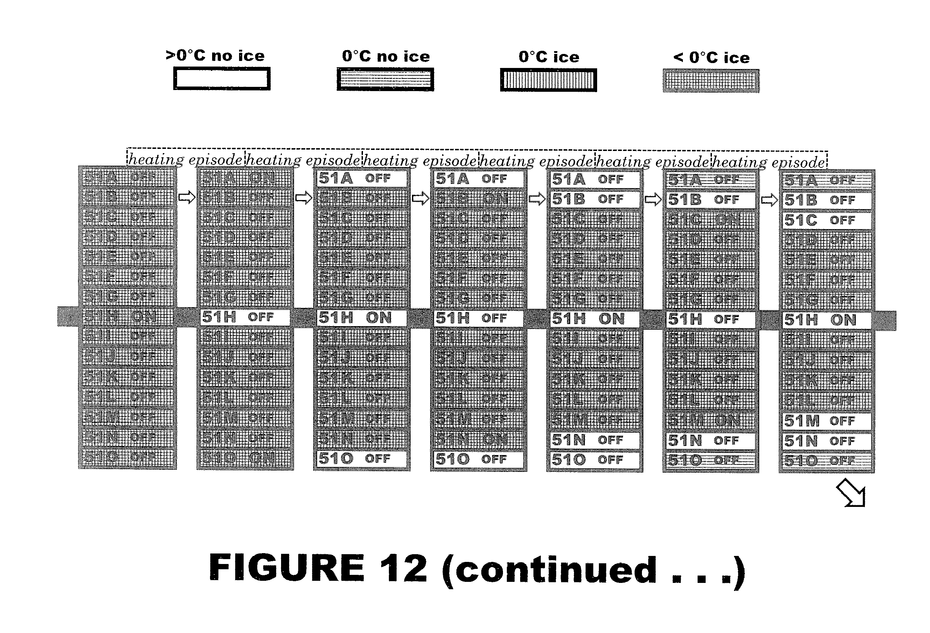

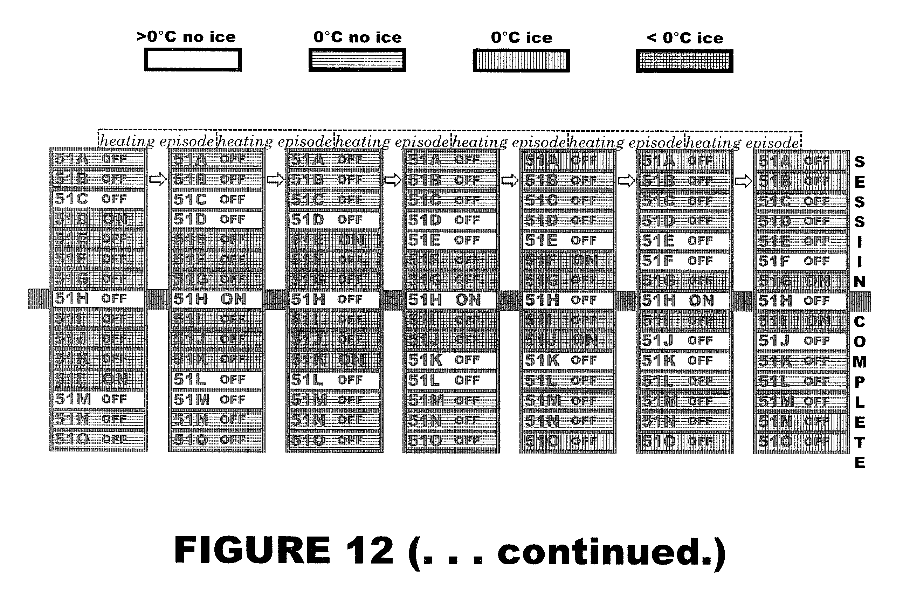

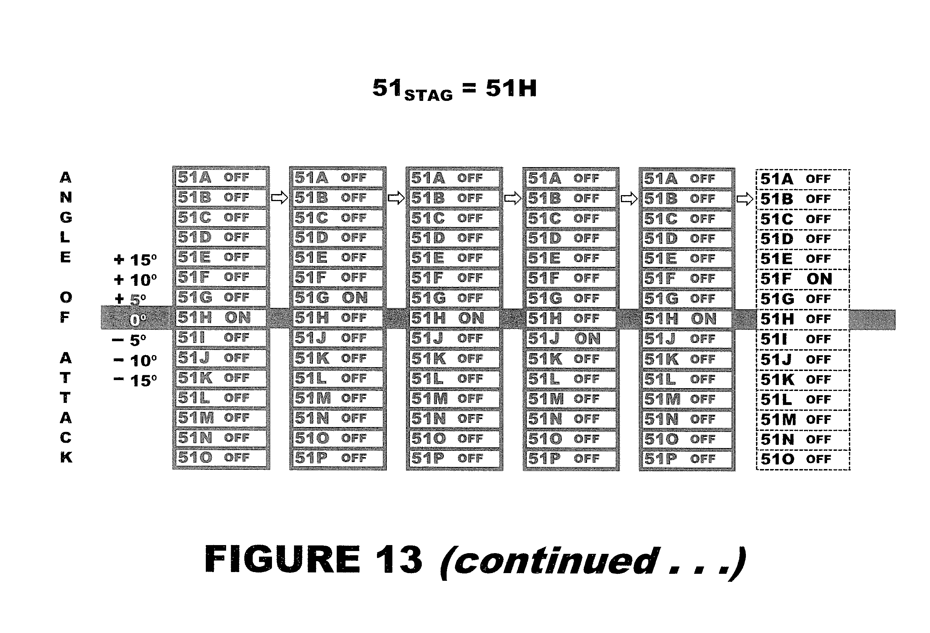

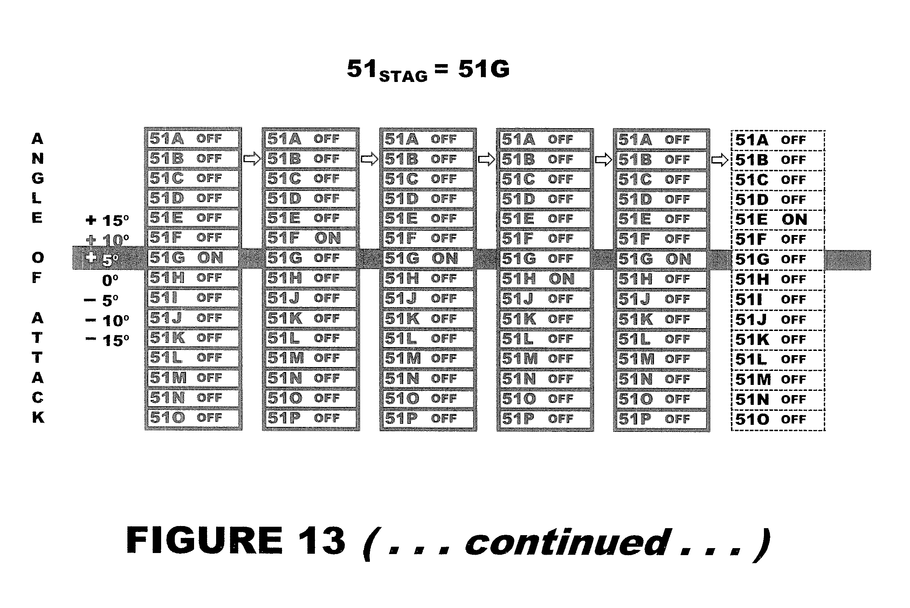

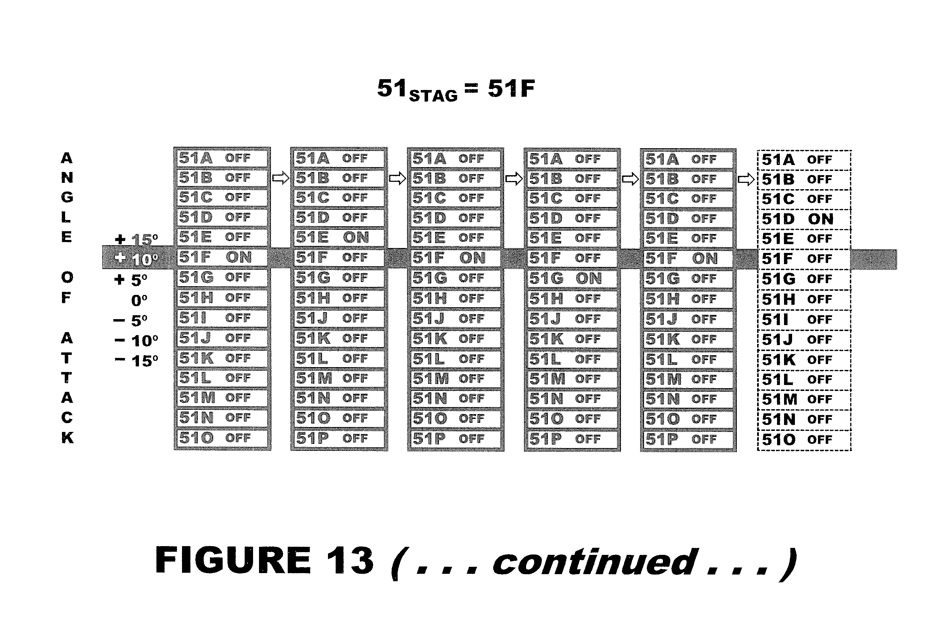

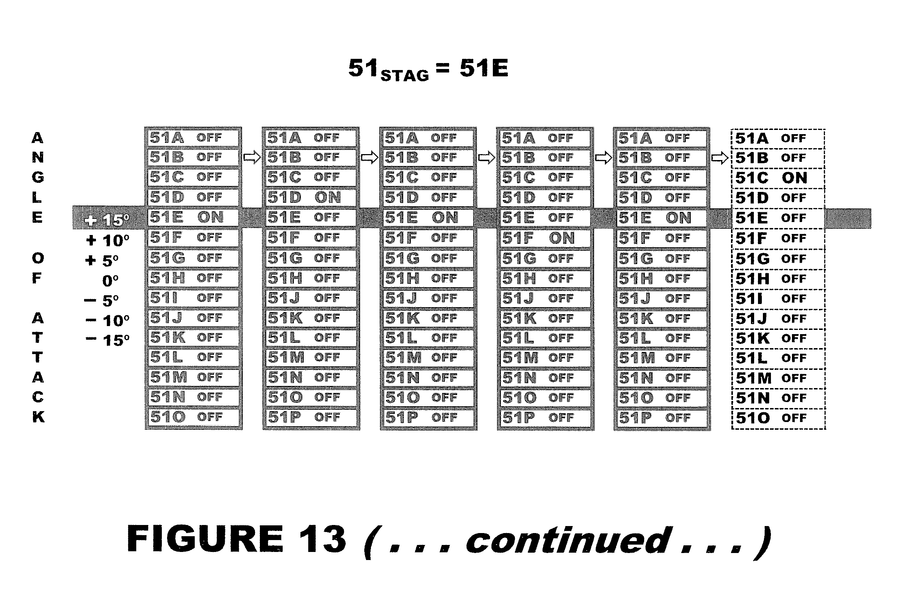

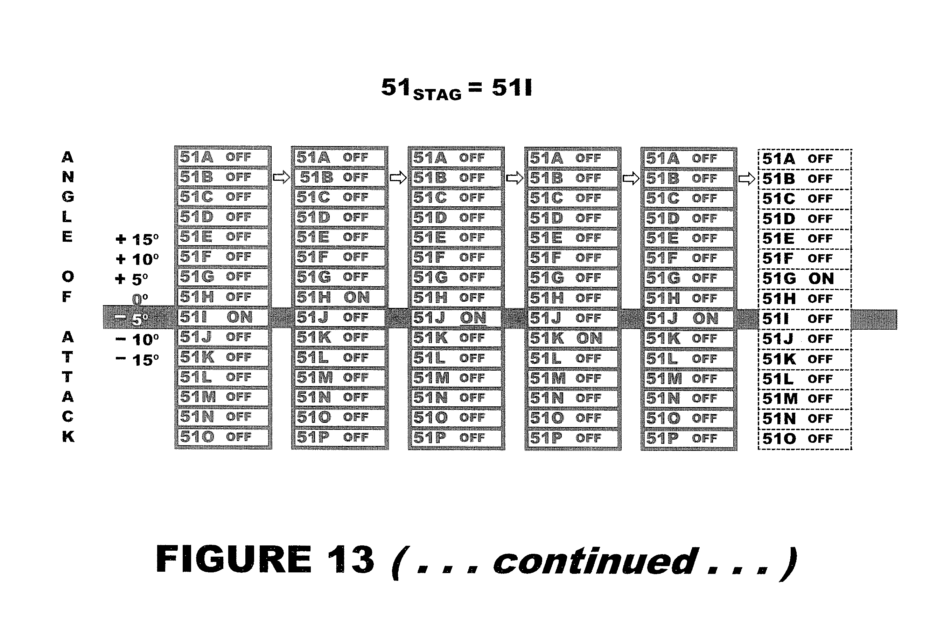

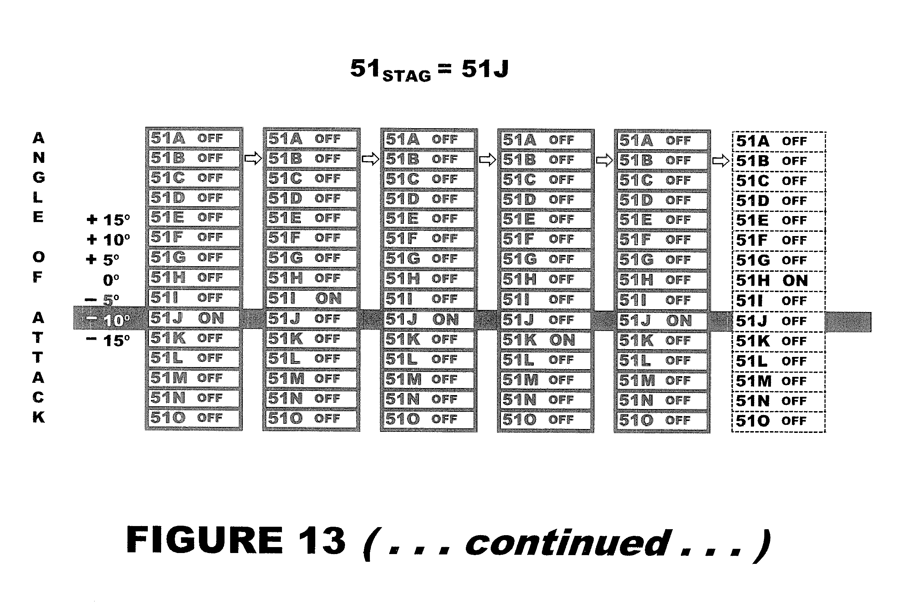

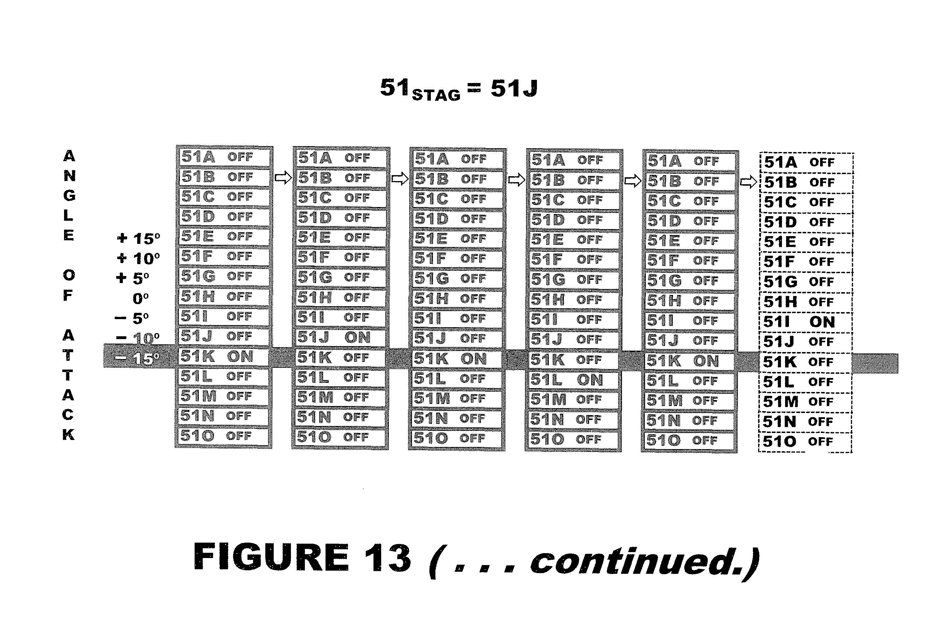

In the sessions shown in Figures 3 - 10, only one non-stagnation heater 51_{nonSTAG} is involved in each heating episode. However, as shown in Figure 12 and Figure 13, two-heater episodes are also possible. The two non-stagnation heaters 51_{nonSTAG} involved in a particular heating episode can (but need not) be symmetrically arranged relative to the stagnation heater 51_{STAG}. Reiterations can progress in a fore-to-aft pattern as shown in Figure 11, in an aft-to-fore pattern as shown in Figure 12, or in any other appropriate pattern.

In the ice-protection schemes shown in Figures 3 - 12, the heater 51H is the stagnation heater 51_{STAG} and, as shown in Figure 13, this could be the case if the angle of attack is equal to 0°. However, as is also shown in Figure 13, as the angle of attack changes, the stagnation region changes, and thus stagnation heater 51_{STAG} will change identities within the array 50. When this happens, the heating episodes can adjust as appropriate to involve the real-time stagnation heater 51_{STAG} in each heating episode. The ice protection system 30 can be designed to accommodate the expected angles of attack (*e.g*., -5° to +5°, -10° to +10°, -15° to +15°, etc.).

In the Ice protection schemes shown in Figures 3 - 13, the stagnation heater 51_{STAG} is turned ON for an interval and turned OFF for an interludes during each heating episode. For most aircrafts and in most flight circumstances, the interval and the interlude can be selected to prevent icing on the stagnation region. However, the controller 90 preferably also allows a heating session wherein the stagnation heater 51STAG remains continuously on to accommodate extremely cold temperatures (*e.g*.*,* less than 20° C).

One may now appreciate that, with the ice protection system 30, a heater array 50 can be architected that effectively and efficiently protects aircraft surface.

It will be understood that the present invention has been described above purely by way of example, and modifications of detail can be made within the scope of the invention.

Each feature disclosed in the description, and (where appropriate) the claims and drawings may be provided independently or in any appropriate combination.

## Claims

1. An ice protection system (30) comprising:
a heater array (50) comprising a series of consecutive electrothermal heaters (51) which proceed one after another in a substantially aft-fore-aft path, one of the heaters (51) being a stagnation heater (51_{STAG}) and the rest the heaters (51) being non-stagnation heaters (51_{nonSTAG});
a power source (60) which supplies the heater array (50) with electrical energy from an onboard generator (70);
a heater interface (80) that switches each heater (51) into either an ON condition or an OFF condition; and
a controller (90) that controllers the heater interface (80) to execute a heating episode involving the stagnation heater (51_{STAG}) and at least one non-stagnation heater (51_{nonSTAG}) and then reiterates this heating episode for the remaining non-stagnation heaters (51_{nonSTAG});
wherein each heating episode includes an interval during which the stagnation heater (51_{STAG}) is in the ON condition and an interlude during which the stagnation heater (51_{STAG}) is in the OFF condition;
wherein during the interval when the stagnation heater (51_{STAG}) is in the ON condition, the non-stagnation heaters (51_{STAG}) are in the OFF condition whereby the stagnation heater (51_{STAG}) receives substantially all of the power supplied to the heater array (50); and
wherein during the interlude when the stagnation heater (51_{STAG}) is in the OFF condition, the involved non-stagnation heater(s) (51_{nonSTAG}) is/are in the ON condition, and the non-involved non-stagnation heaters (51_{nonSTAG}) are in the OFF condition, whereby the involved non-stagnation heater(s) (51_{nonSTAG}) receives substantially all of the power supplied to the heater array (50).

2. An ice protection system (30) as set forth in the preceding claim, wherein the interval is long enough to allow the stagnation region to overheat to a temperature greater than 0°C and wherein the interlude is short enough so that stagnation region will not have the chance to cool down to freezing temperatures.

3. An ice protection system (30) as set forth in either of the two preceding claims, wherein the controller (90) controls the heater interface (80) so that, during each heating episode, the stagnation heater (51_{STAG}) is switched to the ON condition for at least one interval and then switched to the OFF condition for at least one interval.

4. An ice protection system (30) as set forth in any of claims 1-3, wherein each heating episode involves only one non-stagnation heater (51_{nonSTAG}).

5. An ice protection system (30) as set forth in any of claims 1-3, wherein each heating episode involves at least two non-stagnation heaters (51_{nonSTAG}).

6. An ice protection system (30) as set forth in any of the preceding claims, wherein the controller (90) controls the heater interface (80) so that the stagnation heater (51_{STAG}) shifts location based on flight circumstances.

7. An ice protection system (30) as set forth in any of the preceding claims, wherein at least three of the fore heaters (51) each have an aft-fore dimension of less than 3 cm.

8. An ice protection system (30) as set forth in any of the preceding claims, wherein the heaters (51) each cover a surface area of less 200 cm².

9. An ice protection system (30) as set forth in any of the preceding claims, wherein the heater array (50) comprises at least seven heaters (51).

10. An ice protection system (30) as set forth in any of the preceding claims, wherein the interludes and the intervals are each less than 1 second and greater than 0.10 second.

11. An ice protection system (30) as set forth in any of the preceding claims, wherein the heater array (50) covers a surface area of at least 1000 cm² and less than 10 m².

12. An ice protection system (30) as set forth in any of the preceding claims, wherein the power density of each heater (51) when in its ON condition is at least 5 W/cm².

13. An ice protection system (30) as set forth in any of the preceding claims, wherein the controller (90) controls the heater interface (80) so that the heating episode is reiterated for the remaining non-stagnation heater (51_{nonSTAG}) in an alternate-side-fore-aft pattern, an alternate-side-aft-fore pattern, a same-side-fore-aft pattern, a same-side-aft-fore pattern, or an aft-fore-aft pattern.

14. An ice protection system (30) as set forth in any of the preceding claims, wherein the pattern is reiterated until all of the non-stagnation heaters (51_{nonSTAG}) have been involved in a heating episode.

15. An aircraft (10) comprising an ice-susceptible surface (40) and the ice protection system (30) set forth in any of the preceding claims installed to protect this surface (40).
